# EUROPÄISCHE PATENTSCHRIFT

(11) **EP 0 909 681 B1**
(45) Veröffentlichungstag und Bekanntmachung des Hinweises auf die Patenterteilung: **03.11.2004**
(21) Anmeldenummer: 98118265.2
(22) Anmeldetag: 26.09.1998
(51) Int. Cl.: B60R 19/34

(54) **Pralldämpfer für ein Kraftfahrzeug**
Shock absorber for motor vehicle
Amortisseur de choc pour véhicule automobile

(30) Priorität: 16.10.1997 DE 19745656
(43) Veröffentlichungstag der Anmeldung: 21.04.1999
(60) Teilanmeldung: 03028659.5
(73) Patentinhaber: DaimlerChrysler AG, 70567 Stuttgart (DE)
(72) Erfinder: Hartlieb, Markus, 72141 Walddorfhäslach (DE); Nohr, Matthias Dr., 70188 Stuttgart (DE); Kröger, Matthias, 30559 Hannover (DE); Popp, Karl Prof.Dr., 31535 Neustadt (DE)

(56) Entgegenhaltungen:
- DE-A- 19 633 110
- US-A- 3 482 653
- US-A- 3 893 726
- US-A- 5 460 421

## Beschreibung

Die Erfindung betrifft einen Pralldämpfer für ein Kraftfahrzeug gemäß dem Oberbegriff des Anspruches 1.

In der DE 196 33 110, ist ein Pralldämpfer für einen Stoßfänger eines Kraftfahrzeuges beschrieben, welcher zwei Deformationselemente mit unterschiedlicher Steifigkeit umfaßt, die in Abhängigkeit von der Aufprallgeschwindigkeit des Fahrzeuges beaufschlagt werden. Ein weniger steifes Deformationselement ist ab einer vorbestimmten Fahrgeschwindigkeit mit einem steiferen Deformationselement gekoppelt, welches bei einem Aufprall mit dieser Fahrgeschwindigkeit noch nicht verformt werden würde. Damit das steifere Deformationselement in Abhängigkeit von gemessenen Aufprallwerten bei Bedarf genau zur richtigen Zeit zugeschaltet werden kann, ist dieses durch ein Antriebssystem in den Deformationsraum bewegbar. Auch das Antriebssystem muß dann den Aufprallbelastungen standhalten können, wodurch diese Anordnung nur mit relativ großem Aufwand funktionstüchtig zu verwirklichen ist.

Aus der DE 41 21 497 C2 ist ein Pralldämpfer mit einem Kolben/Zylindersystem bekannt, dessen Kolbenbewegung beim Aufprall erfaßt und bei Erreichen einer großen Verschiebegeschwindigkeit des Kolbens angehalten wird, wonach der Pralldämpfer durch seine plastische Verformung Aufprallenergie abbaut. Der Kolben kann durch detektorgesteuerte, radial einschiebbare Verriegelungsbolzen oder halbringförmige Verriegelungselemente arretiert werden, wonach der Pralldämpfer plastisch verformt wird. Bei diesem Pralldämpfer ist also nur eine Deformationsstufe mit plastischer Verformung für den Energieabbau beim Fahrzeugaufprall vorhanden.

Aus der DE 40 37 101 A1 ist ein Pralldämpfer für einen Stoßfänger in einem Kraftfahrzeug bekannt, dessen Außenrohr bei einem Fahrzeugaufprall verformbar ist, wobei eine träge Masse auf das Außenrohr einwirkt, deren trägheitsbedingte Verlagerung die Veränderung der Querschnittsform des Außenrohres hervorruft. Eine Einstellmöglichkeit für das Pralldämpferverhalten ist hier nicht vorgesehen.

In der US 3 789 948 A1 ist ein Pralldämpfer im Vorbau eines Kraftwagens beschrieben, dessen Dämpferfeder in Abhängigkeit der Geschwindigkeit des Kraftwagens mit geringerem oder nur mit hohem Kräftaufwand zusammendrückbar gesteuert ist, wodurch bei einem Aufprall mit höherer Geschwindigkeit die - Wirkung der Dämpferfeder länger, erhalten bleibt. Um den Federwiderstand zu verändern wird hier ein aufwendiger Verstellmechanismus vorgeschlagen, der im Fahrbetrieb fortlaufend beaufschlagt wird und den Federwiderstand der gefahrenen Geschwindigkeit anpaßt.

In der US 4 929 008 A1 ist ein Pralldämpfer beschrieben, dessen Aufprallenergieabbau zuerst in einem gasbefüllbaren, entfaltbaren Block dann in Scherbolzen und endlich in einem Dämpfermaterial erfolgt, so daß bis zu drei Dämpfungsvorgänge nacheinander eingeleitet werden, je nachdem, wie stark der Aufprall erfolgt. Der Energieabbau wird hier durch die eingeleiteten Kräfte verursacht und kann nicht individuell gesteuert werden.

Aus der gattungsbildenden US 3 893 726 B1 ist ein Pralldämpfer für ein Kraftfahrzeug bekannt, mit einem beim Fahrzeugaufprall verformbaren Deformationskörper, in dessen Weg ein Sperrteil hineinragt, mit welchem aufgrund der Krafteinwirkung beim Aufprall eine plastische Verformung des Deformationskörpers unter Absorption von Aufprallenergie, herbeigeführt wird, wobei der Verformungswiderstand des Deformationskörpers durch eine Steuerung in einer zusätzlichen Deformationsstufe erhöht werden kann, wobei das Sperrteil mindestens zwei Schaltstellungen aufweist, in denen es in den Verschiebeweg des Deformationskörpers hineinragt, wodurch der Deformationskörper durch die Krafteinwirkung beim Aufprall weniger oder mehr plastisch verformt wird.

Die Aufgabe der Erfindung besteht darin, bei einem gattungsgemäßen Pralldämpfer einen einfach zu verwirklichenden, dem Fahrzeugaufprall gesteuert anpaßbaren Verformungswiderstand vorzusehen.

Die Aufgabe wird durch die kennzeichnenden Merkmale des Patentanspruches 1 gelöst.

Der Pralldämpfer ist durch einen Deformationskörper verwirklicht, der mindestens zwei konzentrisch gelagerte Rohre umfaßt, die einzeln oder zusammen durch das Sperrteil an einer Verschiebung gehindert und damit beim Aufprall plastisch verformt werden.

Es ist von Vorteil, wenn ein Pralldämpfer, der z.B. als Crashabsorber in einen Längsträger oder eine Stoßstangenhalterung eingesetzt ist, in seinem Umformwiderstand einstellbar ausgebildet ist, so daß er nach Ermittlung der nach Möglichkeit beim Aufprall abzubauenden Kräfte, erfaßt aufgrund einer precrasherkennung oder durch eine Fahrzeugsensorik, vor oder während des Fahrzeugaufpralles in seiner Wirkung an die Unfallschwere anpaßbar ist.

So kann das Sperrteil aufgrund eines sich durch verschiedene, beim Aufprall sensierte Meßwerte ergebenden Aufprallmeßwertes gesteuert werden oder durch eine Precrasherkennung, die z.B. die Fahrzeuggeschwindigkeit, die Näherungsgeschwindigkeit des Unfallgegners oder dessen Kontur berücksichtigt, das Verformungsverhalten des Pralldämpfers der Unfallschwere vor dem Aufprall bereits angepaßt werden.

Die Verschiebung eines Sperrteiles in unterschiedliche Positionen, in denen es eine weniger starke oder starke plastische Verformung des Deformationselementes unter Absorption von Aufprallenergie herbeiführt, indem es unterschiedlich in den Verschiebeweg des Deformationskörpers hineinragt, stellt eine einfach und kostengünstig zu verwirklichende Lösung zur Ausbildung des Pralldämpfers da.

Das dem Aufprall angepaßte Deformationsverhalten führt zu einer Reduzierung der Insassenbelastung, da die Energieabsorption im Pralldämpfer optimiert werden kann. Außerdem kann durch die Steuerung des Pralldämpfers auch auf die Crashkompatibilität des Fahrzeuges in Bezug auf dessen Unfallgegner Rücksicht genommen werden, und auch die Reparaturkosten des mit diesem Pralldämpfer ausgestatteten Fahrzeuges können positiv beeinflußt werden.

Weitere Vorteile und Ausgestaltungen gehen aus den Unteransprüchen und der Beschreibung hervor.

Die Erfindung ist nachstehend anhand einer Zeichnung näher beschrieben.

Es zeigen:

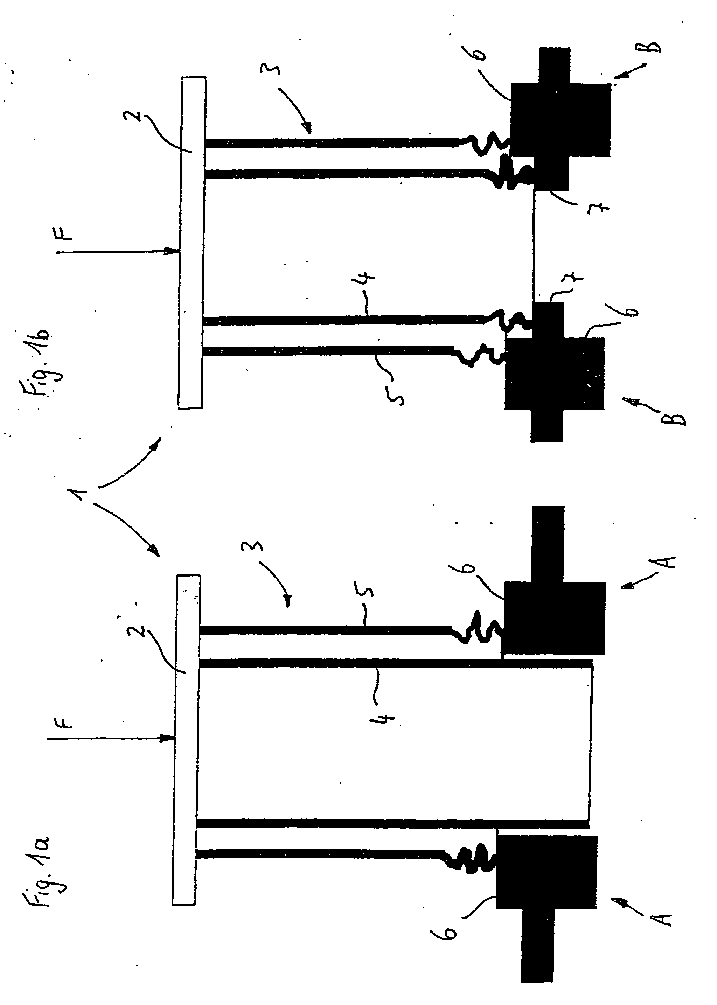

- Fig. 1a: einen Pralldämpfer beim Fahrzeugaufprall mit geringer eingestelltem Verformungswiderstand,
- Fig. 1b: den Pralldämpfer aus Fig. 1a mit höher eingestelltem Verformungswiderstand.

In den Figuren ist ein Pralldämpfer 1, 1' dargestellt, wie er zur Halterung einer Stoßstange in einem Kraftfahrzeug oder als Einsatz im Längsträger Verwendung findet, aber auch beliebig anderswo eingesetzt werden könnte. Der Pralldämpfer 1, 1' hat dabei die Aufgabe, bei einer bei einem Fahrzeugaufprall auf eine Prallplatte 2 bzw. 2' auftreffenden Kraft (Pfeil F), durch seine plastische Verformung Aufprallenergie zu absorbieren .

Der Pralldämpfer 1, 1' ist dabei so ausgebildet, daß sein Verformungswiderstand mit mindestens zwei Schaltstufen gesteuert werden kann, und somit der Pralldämpfer 1, 1' an die Unfallschwere anpaßbar ist. Nach einer Erkennung des Aufpralles durch Sensoren, die vor dem Aufprall als Precrasherkennung, z.B. über bildgebende Systeme, oder während des Aufpralles Aufpralldaten ermitteln, werden bei den gezeichneten Ausbildungen dem Pralldämpfer 1, 1' durch eine Schaltmöglichkeit zwei verschiedene Längssteifigkeiten gegeben, wodurch eine geringere oder eine höhere Energieabsorption bei der plastischen Verformung des Pralldämpfers 1, 1' erfolgt.

Das dem Aufprall angepaßte Deformationsverhalten führt zu einer Reduzierung der Insassenbelastung, da die Energieabsorption im Pralldämpfer 1, 1' optimiert wird. Außerdem kann durch die Steuerung des Pralldämpfers 1, 1' auch auf die Crashkompatibilität des Fahrzeuges in Bezug auf dessen Unfallgegner Rücksicht genommen werden, und auch die Reparaturkosten des mit diesem Pralldämpfer 1, 1' ausgestatteten Fahrzeuges können positiv beeinflußt werden.

In den Figuren 1a und 1b, in denen der Pralldämpfer 1 durch eine Aufprallkraft F belastet ist, umfaßt der Pralldämpfer 1 anschließend an die kraftaufnehmende Prallplatte 2 als Deformationskörper 3 zwei konzentrisch gelagerte Rohre 4 und 5, die einzeln oder gemeinsam plastisch verformt werden können. Die plastische Verformung wird durch ein Sperrteil 6 erreicht, welches in den Verschiebeweg des Deformationskörpers 3 hineinragt und diesen dadurch an einer axialen Verschiebung hindern kann.

In einer ersten Schaltstellung A, gemäß der Fig. 1a, liegt das Sperrteil 6 im Weg des äußeren Rohres 5 und wirkt auf dieses bei der Beaufschlagung des Pralldämpfers 1 durch die Aufprallkraft F deformierend ein. Das innenliegende Rohr 4 wird in seiner Axialbewegung nicht behindert. In dieser Schaltstellung des Sperrteiles 6 reagiert der Pralldämpfer 1 weich, was für einen leichteren Aufprall in der Energieabsorption ausreichend ist. Es ist natürlich möglich, in einer anders gestalteten Ausbildung,- das Sperrteil bei einem weich geschalteten Deformationskörper in den Weg des inneren Rohres zu plazieren und das äußere Rohr daran vorbeizuführen.

Bei einem starken Aufprall wird dann, wie in der Fig. 1b dargestellt, das Sperrteil 6 in die Schaltstellung B überführt, in der ein Schieber 7, durch einen nicht näher dargestellten Antrieb bewegt, in den Weg des inneren Rohres 4 hineinragt, wodurch der Verformungswiderstand in dieser zusätzlichen Deformationsstufe erhöht ist. Das Sperrteil 6 kann in beliebig vorherbestimmbaren Stellungen am Umfang des Deformationskörpers 3 angeordnet werden und führt bei kostengünstiger Herstellung und einfachem Aufbau zu einem funktionstüchtigen, im Deformationsverhalten schaltbaren Pralldämpfer 1.

## Patentansprüche

1. Pralldämpfer (1, 1') für ein Kraftfahrzeug, mit einem beim Fahrzeugaufprall verformbaren Deformationskörper (3, 3'), in dessen Weg ein Sperrteil (6, 6') hineinragt, mit welchem aufgrund der Krafteinwirkung beim Aufprall eine plastische Verformung des Deformationskörpers (3, 3') unter Absorption von Aufprallenergie herbeigeführt wird, wobei der Verformungswiderstand des Deformationskörpers (3, 3') durch eine Steuerung in einer zusätzlichen Deformationsstufe erhöht werden kann, wobei das Sperrteil (6, 6') mindestens zwei Schaltstellungen (A, B) aufweist, in denen es in den Verschiebeweg des Deformationskörpers (3 bzw. 3') hineinragt, wodurch der Deformationskörper (3 bzw. 3') durch die Krafteinwirkung beim Aufprall weniger oder mehr plastisch verformt wird,
**dadurch gekennzeichnet,**
**daß** der Deformationskörper (3) mindestens zwei konzentrische gelagerte Rohre (4 und 5) umfasst, die einzeln oder zusammen durch das Sperrteil (6) an einer Verschiebung gehindert sind.

2. Pralldämpfer nach Anspruch 1,
**dadurch gekennzeichnet,**
**daß** die Schaltstellungen (A bzw. B, A' bzw. B') des Sperrteiles (6, 6')aufgrund eines Aufprallmeßwertes geschaltet werden.

3. Pralldämpfer nach Anspruch 1,
**dadurch gekennzeichnet,**
**daß** die Schaltstellungen (A bzw. B, A' bzw. B') des Sperrteiles (6, 6') aufgrund einer Precrasherkennung wählbar sind.

4. Pralldämpfer nach Anspruch 1,
**dadurch gekennzeichnet,**
**daß** ein bewegbarer Sperrschieber (7, 7') am Sperrteil (6 bzw. 6')gelagert ist.

## Claims

1. An impact absorber (1, 1') for a motor vehicle having a deformation body (3, 3') which is able to deform in the event of a vehicle impact and into the path of which projects a stopping part (6, 6') which brings about a plastic deformation of the deformation body (3, 3') due to the force imparted by the impact, thereby absorbing impact energy, it being possible to increase the deformation resistance of the deformation body (3, 3') by moving to an additional deformation stage, the stopping part (6, 6') having at least two switching positions (A, B) in which it projects into the path of movement of the deformation body (3, 3'), thereby causing the deformation body (3, 3') to be deformed more or less plastically due to the force imparted by the impact,
**characterised in that**
the deformation body (3, 3') comprises at least two concentrically positioned tubes (4 and 5) which are prevented from moving either individually or together by the stopping part (6)

2. An impact absorber in accordance with claim 1,
**characterised in that**
the switching positions (A/B, A'/B') of the stopping part (6, 6') are actuated on the basis of an impact value.

3. An impact absorber in accordance with claim 1,
**characterised in that**
the switching positions (A/B, A'/B') of the stopping part (6, 6') can be selected on the basis of a pre-crash identification system.

4. An impact absorber in accordance with claim 1,
**characterised in that**
a movable stopper (7, 7') is mounted on the stopping part (6, 6').

## Revendications

1. Amortisseur de choc (1, 1') pour un automobile comportant un corps de déformation (3, 3') déformable lors du choc du véhicule, dans la course duquel saillit un organe d'arrêt (6, 6') provoquant, en raison de l'effet de force lors du choc, une déformation plastique du corps de déformation (3, 3') en absorbant de l'énergie de choc, la résistance à la déformation du corps de déformation (3, 3') pouvant être augmentée par une commande située dans un niveau de déformation supplémentaire, l'organe d'arrêt (6, 6') présentant au moins deux positions de commutation (A, B) dans lesquelles il saillit dans la course de déplacement du corps de déformation (3 ou 3'), provoquant une déformation plastique plus ou moins importante par l'effet de force lors du choc,
**caractérisé en ce que** le corps de déformation (3) comprend au moins deux tubes (4 et 5) logés concentriquement, dont le déplacement individuel ou commun est empêché par l'organe d'arrêt (6).

2. Amortisseur de choc selon la revendication 1,
**caractérisé en ce que** les positions de commutation (A ou B, A' ou B') de l'organe d'arrêt (6, 6') sont commutées en fonction de la valeur de choc mesurée.

3. Amortisseur de choc selon la revendication 1,
**caractérisé en ce que** les positions de commutation (A ou B, A' ou B') de l'organe d'arrêt (6, 6') peuvent être choisies en fonction d'une détection de « precrash ».

4. Amortisseur de choc selon la revendication 1,
**caractérisé en ce qu'**un tiroir d'arrêt (7, 7') mobile est logé au niveau de l'organe d'arrêt (6 ou 6').
